(19) **Europäisches Patentamt**

**European Patent Office**

**Office européen des brevets**

(11) Publication number : **0 300 488 B1**

(12) # EUROPEAN PATENT SPECIFICATION

(45) Date of publication of patent specification :
24.04.91 Bulletin 91/17

(21) Application number : **88111815.2**

(22) Date of filing : 22.07.88

(51) Int. Cl.⁵ : **B62D 55/24**

(54) **Rubber crawler.**

(30) Priority : 24.07.87 JP 185174/87

(43) Date of publication of application :
25.01.89 Bulletin 89/04

(45) Publication of the grant of the patent :
24.04.91 Bulletin 91/17

(84) Designated Contracting States :
**DE FR GB IT**

(56) References cited :
EP-A- 0 118 912
US-A- 3 027 200

(73) Proprietor : **Bridgestone Corporation**
**10-1, Kyobashi 1-Chome Chuo-Ku**
**Tokyo 104 (JP)**

(72) Inventor : **Ono, Yoshihiko**
**150-7 Kashio-cho Totsuka-ku**
**Yokohama-shi Kanagawa-ken (JP)**

(74) Representative : **Huss, Carl-Hans, Dipl.-Ing.**
**Patentanwalt Griesstrasse 3 a Postfach 14 54**
**W-8100 Garmisch-Partenkirchen (DE)**

## Description

### BACKGROUND OF THE INVENTION

Field of the Invention :

The present invention relates to a rubber clawler comprising an endless rubber-made belt-like crawler shoe which is used as extended over a sprocket and an idler tumbler of a vehicle and having a passing surface forming on an inner circumference of which rollers between the sprocket and idler tumbler roll, and the crawler shoe in which many cores are embedded at the bases thereof perpendicularly to the longitudinal direction of the crawler shoe.

Description of the Prior Art :

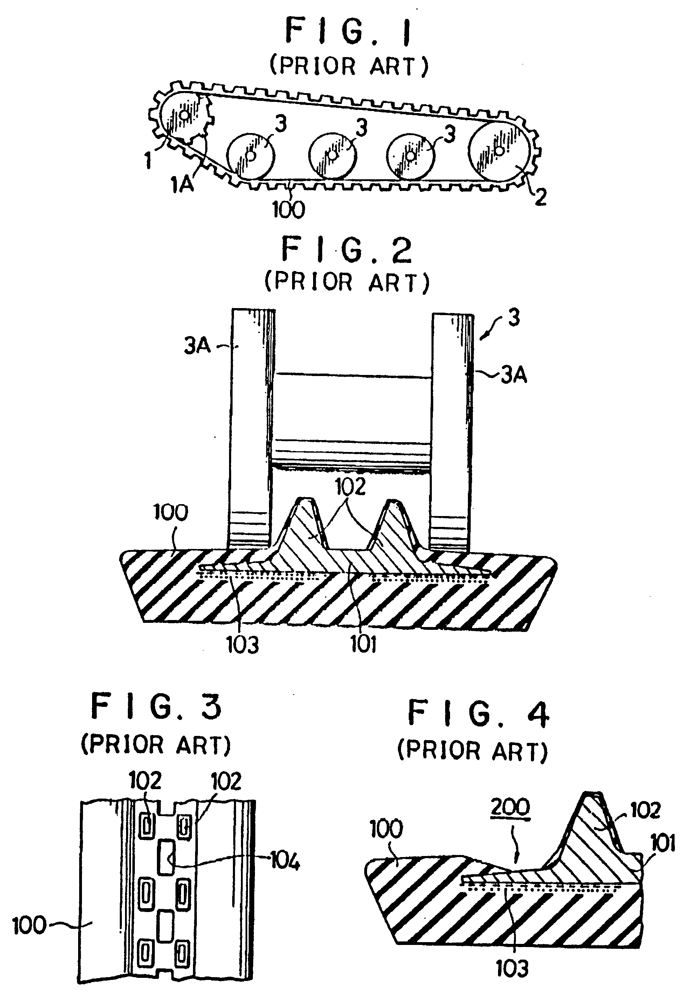

Conventionally, the vehicle of this type with use of a rubber clawler are adapted to include a sprocket 1, an idler tumbler 2, an endless rubber-made belt-like crawler shoe 100 which is used as extended over the sprocket 1 and the idler tumbler 2, and a plurality of rollers 3 disposed interiorly of and in contact with the crawler shoe 100 between the sprocket 1 and the idler tumbler 2 and rolled along the internal periphery of the crawler shoe 100, as illustrated in Fig. 1.

Also as shown in Fig. 2, many cores 101 have the bases thereof embedded in the crawler shoe 100 perpendicularaly to the longitudinal direction of the crawler shoe 100, and have guide projections 102 formed integrally thereon as protruded inwardly form the inner circumference of crawler shoe 100. Further, a tensile reinforcing member 103 such as steel cord or the like is embedded in the crawler shoe 100 in such a manner as surrounds the outer circumferences of the cores 101. Wheels 3A in pair composing each roller 3 roll on the inner circumference of the crawler shoe 100 that are outside the guide projection 102, respectively. Sprocket holes 104 for allowing the teeth of the sprocket 1 to be fitted therein are made in the crawler shoe 100 between the cores 101, as illustrated in Fig. 3.

Such prior vehicles however suffer from the following problems.

The wheels 3A of the rollers 3, which roll along the internal periphery of the crawler shoe 100 alternately on the cores 101 and on a rubber surface between the cores 101. And, they are often rendered to severe vertical motion since the rollers 3 fall on the rubber surface when reaching that surface.

Additionally, the internal surface of the crawler shoe 100 along which the rollers 3 are rolled is liable to permit the rubber to be stripped from the core 101 at the boundary there between for thereby causing water and sand, etc., to enter into the interior from that boundary to increase the failure of the rubber. Moreover, when each core 101 is covered with a thin sheet of rubber, that portion is damaged to thereby permit water and mud, etc., to enter into that damaged portion 200 as illustrated in Fig. 4. In particular, in the so-called outer roller system, where the wheels 3A, in pair composing each roller 3 roll along the outside of the guide projection 102, the rubber located outside the projections 102 gets liable to be damaged. This can be prevented by making thicker the rubber of the crawler shoe 100, but this is not a practical solution.

### SUMMARY OF THE INVENTION

In view of the drawbacks of the conventinal rubber crawlers, it is an object of the present invention to provide a rubber crawler capable of prevention of any damage produced on the crawler shoe internal periphery located on the core, i.e., the surface of the crawler shoe along which each roller is rolled, and of prevention of the vertical vibration of these rollers.

To achieve the above objects, the rubber crawler of the present invention includes a sprocket, an idler tumbler, a plurality of rollers, an endless rubber-made bolt-like crawler shoe which is used as extended over the sprocket and the idler tumbler of a vehicle and having a passing surface forming on an inner circumference of which the rollers between the sprocket and the idler tumbler roll, and the crawler shoe in which many cores are embedded at the bases thereof perpendicularly to the longitudinally direction of the crawler shoe, the core further having a surface corresponding to the surface of the crawler shoe along which rollers are rolled, the surface of the core being made wider longitudinally of the crawler shoe than that of the base of the core. The rubber crawler of the present invention thus provides the extended core part having the core suface corresponding to the surface along which rollers are rolled, the core surface being made wider longitudinally of the crawler shoe than the width of the bases of the core. The rubber crawler can hereby climinate the problem of the core at portions thereof along which the rollers are rolled and can prevent any vibration of the rollers as well as assure a durable structure.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a side view illustrating a vehicle around which a prior art rubber crawler is trained ;
FIG. 2 is a front view in cross section illustrating the prior rubber crawler of FIG. 1 ;
FIG. 3 is a plane view illustrating the prior rubber crawler of FIG. 1 ;

FIG. 4 is a cross sectional view illustrating the difficulty of the prior rubber crawler ;

FIG. 5 is a plane view illustrating a preferred first embodiment of a rubber crawler according to the present invention ;

FIG. 6 is a plane view illustrating a second embodiment of the rubber crawler of the present invention ;

FIG. 7 is a plane view illustrating a third embodiment of the same ;

FIG. 8 is a plane view enlarged illustrating or concave portion and a large-sized concave portion ;

FIG. 9 is a side view in cross section of FIG. 8 ;

FIG. 10 is a front view in cross section of FIG. 8 ;

FIG. 11 is a perspective view illustrating a core ;

FIG. 12 is a side view in cross section illustrating other embodiment of the present invention ;

FIG. 13 and 14 are cross sections each illustrating the effect of the concave portion formed in a crawler shoe according to the present invention when the crawler shoe is bent ;

FIGS. 15 and 16 are plane views each illustrating another example of the core ; and

FIG. 17 is a cross sectional view illustrating of core of further another embodiment.

## DESCRIPTION OF THE PREFERRED EMBODIMENT

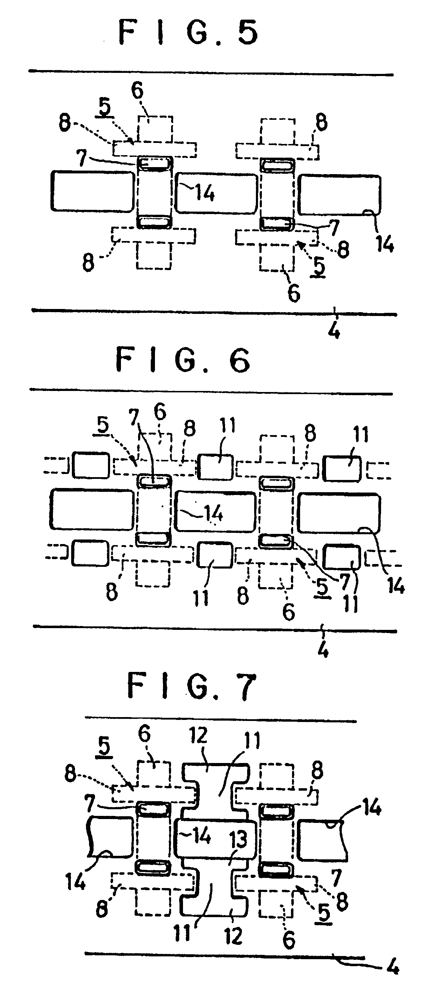

Referring now to FIGS. 5 to 17, embodiments of a rubber crawler according to the present invention are illustrated.

FIG. 5 illustrates a first embodiment of a rubber crawler of the invention, in which the rubber crawler is used as extend over a sprocket 1 and an idler tumbler 2 of a vehicle shown is FIG. 1. The rubber crawler includes an endless rubber-made belt-like crawler shoe 4 having a passing surface along which a plurality of rollers 3 are rolled forwardly and backwardly, and a plurality of cores 5 having bases 6 embedded therein and spaced away at a proper distance longitudinally thereof. The core 5 includes, as best illustrated in FIGS. 10 and 11, a pair of guide projections 7 and a pair of corresponding extended core parts 8, each having greater width than that of the base 6 of the core 5 longitudinally of the crawler shoe 4 and being formed on both sides of those guide projections 7 as best illustrated in FIGS. 10 and 11. Additionally, a plurality of ribs 9 are formed on the outer periphery of the crawler shoe 4.

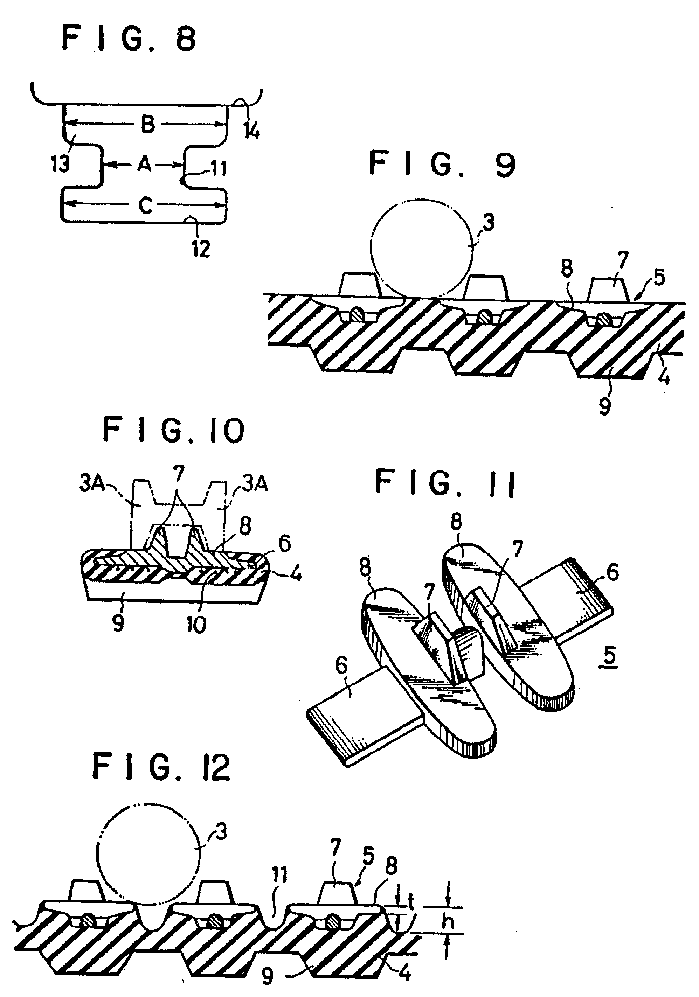

And, a reinforcing member 10 such as steel cords is embedded in the crawler shoe 4 so as to surround the outer periphery of the cores 5 embedded in the crawler shoe 4. When wheels 3A in pair composing each roller 3 rolls on the inner circumference of the crawler shoe 4 that are outside the guide projection 7, wheels 3A roll on the extended core parts 8 of the core 5, as illustrated in FIG. 8.

In succession, FIG. 6 illustrates a second embodiment. In the second embodiment, a concave portion 11 is formed in the crawler shoe 4 between any two adjacent cores 5 located on the passing surface through which the rollers pass. The depth h of the concave portion 11 is preferably greater than the thickness t of the extended core part 8.

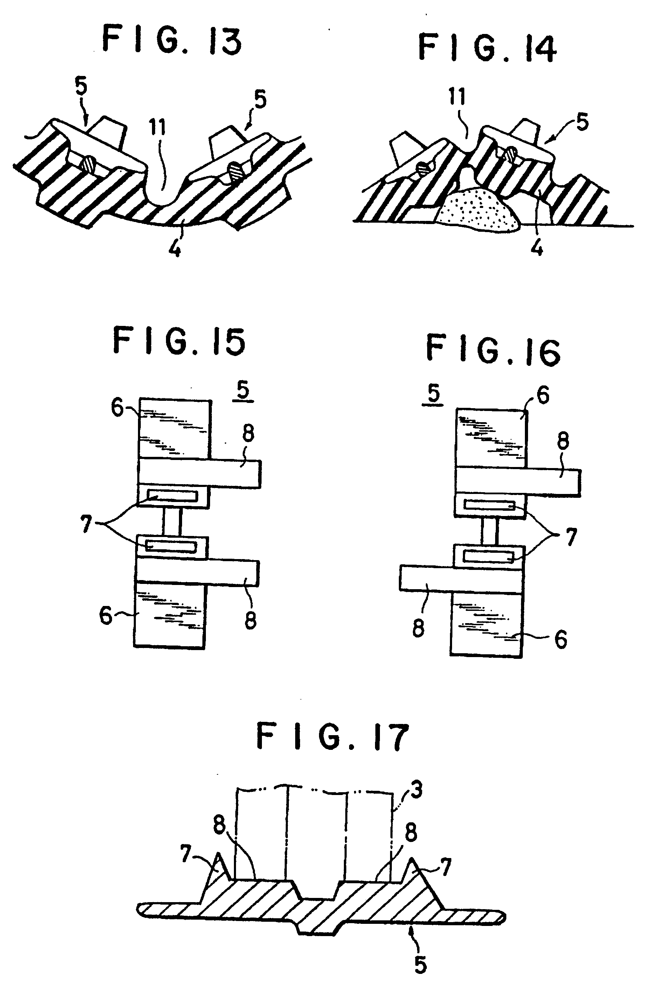

Referring further here to FIG. 7, a third embodiment is illustrated, wherein large-sized concave portions 12 and 13 are formed adjoining to both ends of the concave postion 11 widthwise of the crawler shoe 4 and continuously to the concave postion 11, which large-sized concave portions 12 and 13 have their lengths B and C in the longitudinal direction of the crawler shoe 4 respectively greater than the length A of the concave portion 11 (B > A, C > A) as also shown in FIG. 8. Here, a numeral 14 in FIGS. 5 and 6 designates a sprocket hole. The large-sized concave portions 12 and 13 are not necessarily required to be two. Only one may be existent only on the side of the sprocket hole 14 (i.e., the large-sized concave portion 13). Such the concave portion 11 prevents, as illustrated in FIG. 13, a boundary between the core 5 and the rubber of the crawler shoe 4 from being rendered to fatigue and separation when the crawler shoe 4 is inwardly deflected at portions where the sprocket 1 and the idler tumbler 2 are located. Moreover, such a concave portion 11 prevents the boundary between the rubber and core 5 from being separated also when the side of the crawler shoe 4 where the crawler shoe 4 makes contact with the ground gets on a stone, etc., as illustrated in FIG. 14.

Here, FIG. 15 illustrates another modification of the core 5 where each extended core part 8 is extended only one side with respect to the base 6 of the core 5. Likewise, FIG. 6 illustrates still another modification of the core 5 where both ends of each extended core part 8 are extended oppositely.

FIG. 7 illustrates another modification of the extended core part 8 formed inside of a pair of guide projections 7.

Although certain preferred embodiments have been shown and described, it should be understood that made changes and modifications may be made therein without departing from the scope of the appended claims.

## Claims

1. A rubber crawler comprising :
an endless rubber-made belt-like crawler shoe (4) which is used as extended over a sprocket (1) and an idler tumbler (2) of a vehicle, and having a passing surface forming on an inner circumference of which a plurality of rollers (3) are rolled, many cores (5) having bases (6), said each base (6) being embedded in said crawler shoe and spaced away longitudinally of said crawler shoe (4) at a proper distance, characterized in that said rubber crawler further comprises extended core parts (8) each formed by making wlder a core (5) surface corresponding to said passing surface along which said rollers (3) are rolled than the width of each bace (6) of many cores (5) longitudinally of the crawler shoe (4).

2. A rubber crawler according to claim 1 wherein concave portions (11) are provided, each being formed at a location of said crawler shoe (4) between core portions located on passing surface of the crawler shoe (4) along which said rollers (3) are rolled.

3. A rubber crawler according to claim 2 wherein large-sized concave portions (12) and (13) are provided, each being formed continuously on both sides of said concave portion (11) widthwise of the crawler shoe (4) or at least on the sides of a sprocket hole (14) fromed in the crawler shoe (4) for engagement with the sprocket, each of said large-sized concave portions (12) and (13) being greater longitudinally of the crawler shoe (4) than each of said concave portions (11).

## Ansprüche

1. Gummiraupe bestehend aus einem endlosen, bandförmigen Hauptkörper (4), der sich im Gebrauch über ein mit Zähnen versehenes Antriebsrad (1) und ein Spannrad (2) eines Fahrzeuges erstreckt und eine Lauffläche hat, auf deren innerem Umfang eine Mehrzahl von Rollen (3) abrollen kann und in dem eine Mehrzahl von Kernstücken (5) mit eingebetteten Grundplatten (6) eingeformt sind, die im geeigneten Abstand in Längsrichtung des Hauptkörpers liegen, dadurch **gekennzeichnet,** daß die Raupe außerdem Kernstückerweiterungen (8) aufweist, die jede dadurch gebildet sind, daß die Kernstückoberfläche längs der Lauffläche, auf der die Rollen (3) abrollen können, um mehr als die Breite jeder Grundplatte (6) der Kernstücke in Längsrichtung des Hauptkörpers (4) vergrößert ist.

2. Raupe nach dem Anspruch 1, **gekennzeich**net durch konkave Vertiefungen (11), die jede im Hauptkörper (4) zwischen den Kernstückteilen eingeformt sind, die in der Lauffläche des Hauptkörpers (4) liegen, entlang der die Rollen (3) abrollen können.

3. Raupe nach dem Anspruch 2, **gekennzeich**net durch größere konkave Vertiefungen (12, 13), die je eine auf beiden Seiten der konkaven Vertiefung (11) und in diese übergehend über die Breite des Hauptkörpers oder mindestens auf der Seite der Zahnlöcher (14) für das Antriebsrad eingeformt sind, wobei jede der größeren konkaven Vertiefungen in der Längserstreckung des Hauptkörpers größer als die konkave Vertiefung (11) ist.

## Revendications

1. Une chenille en caoutchouc constituée d'une chenille à patins (4) en forme de courroie sans fin en caoutchouc fonctionnant en tension entre un barbotin (1) et un tambour de tension (2) d'un véhicule, sa surface de roulement intérieure passant sur un ensemble de galets (3), et sur beaucoup d'armatures (5) ayant des embases (6), chacune desdites embases (6) étant enrobée dans ledit patin de chenille à une distance longitudinale convenable dudit patin de chenille (4), caractérisée en ce que ladite chenille comporte des parties d'armature allongées (8), chacune étant formée en élargissant une surface d'armature (5) correspondant à ladite surface de roulement le long de laquelle roulent lesdits galets (3), davantage que l'embase (6) de nombreuses armatures (5), dans le sens du déplacement longitudinal du patin de chenille (4).

2. Une chenille en caoutchouc selon la revendication 1 dans laquelle des zones concaves (11) sont aménagées, chacune étant formée à un endroit dudit patin de chenille (4) entre des parties d'armatures situées sur la surface de passage du patin de chenille (4) le long de laquelle roulent lesdits galets (3).

3. Une chenille en caoutchouc selon la revendication 2 dans laquelle des zones concaves de grande dimension (12) et (13) sont aménagées, chacune étant formée de manière continue des deux côtés d'une dite zone concave (11) de largeur comparable à celle du patin de chenille (4) ou au moins sur les côtés de l'encoche du barbotin (14) pratiquée dans le patin de chenille (4) pour engrener avec le barbotin, chacune desdites zones concaves (12) et (13) de grande dimension étant de plus grande dimension dans le sens longitudinal du patin de chenille (4) que chacune desdites zones concaves (11).

# F I G . 1
## (PRIOR ART)

3   3   3

1
1A
100
2

# F I G . 2
## (PRIOR ART)

3A
3
3A

102

100

103   101

# F I G . 3
## (PRIOR ART)

102   102

104

100

# F I G . 4
## (PRIOR ART)

200
102
100
101

103

# F I G. 5

# F I G. 6

# F I G. 7

6

EP 0 300 488 B1

FIG. 8

B
A
C
13
14
11
12

FIG. 9

3
8  7  5
9  4

FIG. 10

3A  7  3A
8
6
4
9  10

FIG. 11

8
8  7
7
6
6
5

FIG. 12

3
11  7  5  8
t
h
9  4

7

# FIG. 13

# FIG. 14

# FIG. 15

# FIG. 16

# FIG. 17